(19) Europäisches Patentamt
European Patent Office
Office européen des brevets

(11) **EP 0 807 828 A1**

## (12) DEMANDE DE BREVET EUROPEEN

(43) Date de publication:
19.11.1997 Bulletin 1997/47

(51) Int. Cl.$^6$: **G01S 5/06**

(21) Numéro de dépôt: 96490023.7

(22) Date de dépôt: 14.05.1996

(84) Etats contractants désignés:
AT BE CH DE DK ES FI FR GB GR IE IT LI LU MC NL PT SE

(71) Demandeur:
CENTRE NATIONAL DE
LA RECHERCHE SCIENTIFIQUE (CNRS)
75794 Paris Cédex 16 (FR)

(72) Inventeurs:
• Leroy, Yves
59493 Villeneuve d'Ascq (FR)

• Benlarbi-Delai, Aziz
59152 Chereng (FR)
• Covillers, Jean-Pierre
59000 Lille (FR)

(74) Mandataire: Lepage, Jean-Pierre
c/o Innovations et Prestations S.A.,
23-25, rue Nicolas Leblanc,
Boîte Postale 1069
59011 Lille Cédex (FR)

(54) **Procédé et dispositif de repérage de la position d'une source dotée d'un émetteur de micro-ondes**

(57) L'invention concerne un dispositif et un procédé de repérage de la position d'une source (1) dotée d'un émetteur de micro-ondes, destiné principalement à des repérages sur de courtes distances dans une portion de plan ou d'espace.

Selon l'invention, le procédé de repérage est caractérisé par le fait que :

- on utilise au moins deux paires d'antennes (2, 3) placées hors de la zone de déplacement de la source (1),
- on positionne l'émetteur de la source de telle manière que les paires d'antennes (2, 3) en reçoivent le signal,
- on mesure, pour chaque paire d'antennes (2, 3), le déphasage entre les signaux reçus pour chacune des antennes (5, 6, 8, 9) composant la paire (2, 3),
- on détermine l'équation de l'hyperboloïde de révolution représentant le lieu des points où une émission d'ondes identique à celle de la source (1) correspondrait au déphasage $(\varphi_1, \varphi_2)$ mesuré par chaque paire d'antennes (2, 3),
- on détermine l'intersection des hyperboloïdes de révolution pour définir la position de la source (1), afin de repérer la position d'une source de façon précise et avec une solution unique.

Application dans le domaine du repérage et de la détection sur de courtes distances.

Fig.1

## Description

La présente invention concerne un procédé et un dispositif de repérage de la position d'une source dotée d'un émetteur de micro-ondes, destiné principalement à des repérages sur de courtes distances dans une portion de plan ou d'espace.

Elle trouvera son application dans tous les domaines d'activité où il est nécessaire d'effectuer un repérage de la position d'un objet. On pourra notamment l'utiliser pour un repérage de joueurs sur un terrain de sport ou encore dans le cadre d'installations industrielles robotisées.

Divers procédés et dispositifs de repérage sont actuellement utilisés.

Certains d'entre eux sont basés sur la mesure du temps que met un signal à se propager dans l'atmosphère et dans l'espace entre un émetteur et une antenne. Connaissant la vitesse de propagation du signal, on peut facilement déterminer la distance séparant l'émetteur et l'antenne. On connaît, par exemple, des radars qui détectent la présence d'un objet à partir de son écho.

On connaît également des procédés et des dispositifs de type interférométrique ou basés sur la mesure du déphasage entre les signaux issus d'une même source mais reçus en deux points de position connue.

On connaît plus particulièrement un procédé dit de télémétrie cellulaire qui est basé sur un principe voisin de celui des procédés de télélocalisation Decca et Loran utilisés en radionavigation. La télémétrie cellulaire décrite par l'article "Cellular telemetry by microwaves" de A. Benlardi, D. Matton et Y. Leroy dans la publication Electronics Letters du 14 mars 1991 - Vol. 27 Numéro 6, est mise en oeuvre de la façon suivante :

On utilise une source $A_o$ placée dans un plan P et qui émet un signal monochromatique de longueur d'onde $\lambda$. Le signal émis par la source $A_o$ est reçu par deux antennes placées dans le même plan P aux points $A_1$ et $A_2$.

Il existe un déphasage $\varphi_a$ constant entre les signaux reçus en $A_1$ et $A_2$ et provenant de la source $A_o$. Ce déphasage $\varphi$ permet de connaître l'équation du lieu des points du plan P où une émission d'ondes identique à celle de la source $A_o$ correspond au déphasage $\varphi_a$. Cette équation est celle d'une hyperbole de foyers $A_1$ et $A_2$ et d'excentricité égale à

$$\frac{4\,\pi\,(A1\ A2)}{\lambda \varphi_a}$$

où $(A_1\ A_2)$ représente la distance séparant la position des antennes $A_1$ et $A_2$.

Ainsi, la mesure du déphasage $\varphi_a$ entre les signaux reçus en $A_1$ et $A_2$ indique sur quelle hyperbole se trouve la source $A_o$.

Suivant le procédé de télémétrie cellulaire, on utilise également deux autres antennes placées en deux points du plan $A_3$ et $A_4$ et qui permettent de déterminer une autre valeur de déphasage que l'on appellera $\varphi_b$.

La mesure de $\varphi_a$ et de $\varphi_b$ détermine les équations de deux hyperboles situées dans le plan P. Il existe néanmoins une ambiguïté de solution de 360° pour $\varphi_a$ et $\varphi_b$ parce qu'on obtient leur valeur par la détermination de leurs sinus et cosinus.

On détermine donc des couples d'hyperboles correspondant à des déphasages $\varphi_a$ et $\varphi_b$ auxquelles s'ajoute un multiple non connu de 360°.

Connaissant l'équation du plan P et celle des couples d'hyperboles, on peut déterminer leur intersection qui est constituée de un point.

Par les couples d'hyperboles, on a donc plusieurs solutions possibles pour la position de la source $A_o$ et on lève l'ambiguïté par la connaissance de la position initiale de la source $A_o$.

Les procédés et les dispositifs actuels présentent plusieurs inconvénients notamment concernant leur précision.

Dans le cas des installations basées sur la mesure du temps que met le signal à se propager dans l'atmosphère, un inconvénient important est le manque d'adaptabilité à des repérages sur de courtes distances.

En effet, ce type de procédé utilisé notamment pour les radars se base sur la mesure du temps que met le signal à se propager entre la source et une antenne. Si la distance séparant l'émetteur et l'antenne est faible, le temps de propagation est très petit. Sa mesure devient alors très délicate. Par exemple, si les distances à mesurer sont de l'ordre ou inférieures à quelques dizaines de mètres, les temps de propagation à relever sont inférieurs ou même très inférieurs à quelques centaines de nanosecondes.

Des mesures temporelles à des échelles aussi réduites nécessitent des installations très spécialisées et donc très coûteuses. Ce type de procédé est donc peu performant et peu adapté pour des repérages sur de courtes distances.

Un autre inconvénient de tels procédés est leur faible précision pour des repérages sur de courtes distances.

Le repérage s'effectue par la connaissance de la vitesse de propagation du signal que l'on appelle C et par la mesure du temps de propagation T du signal entre la source et l'antenne. On obtient la distance séparant l'antenne de l'émetteur en multipliant C et T. Dans la pratique, C est une valeur très grande (de l'ordre de 300.000 kilomètres par seconde). De ce fait, une petite erreur sur la mesure de T entraîne une imprécision importante sur la distance à déterminer.

Si les temps à mesurer sont petits, l'erreur est proportionnellement plus importante et détériore fortement la précision du repérage.

Concernant les procédés et les dispositifs du type télémétrie cellulaire, un inconvénient principal est l'ambiguïté de solution qu'elle entraîne. Suivant son principe, on détermine l'intersection de plusieurs couples d'hyperboles situées dans le plan P qui définissent plusieurs positions possibles de la source. On ne connaît donc pas directement de ce calcul, la position de la source et il faut avoir connaissance de sa position initiale pour obtenir une solution unique. Cet inconvénient limite les possibilités d'utilisation de la télémétrie cellulaire.

Un autre inconvénient de la télémétrie cellulaire est la limitation spatiale de leur repérage.

En effet, il ne s'adapte qu'à des repérages dans un plan qui est celui où se déplace la source et où se situent les antennes.

Le repérage dans ce plan appelé P est aussi restreint notamment par la présence du dispositif dans le plan P. En effet, les éléments constitutifs du dispositif et notamment les antennes constituent des obstacles au déplacement de la source. Il limite donc la zone de repérage.

Par ailleurs, ce procédé et dispositif nécessitent la transmission d'un signal entre émetteur et antennes de la source. Comme les antennes sont dans le même plan que la source, la transmission du signal peut être gênée ou interrompue par la présence d'objets dans le plan masquant la source lors de son déplacement. Le repérage sera donc le plus souvent limité à une zone vide du plan P.

La présente invention vise à remédier aux inconvénients des dispositifs et des procédés actuels et a notamment pour but de permettre des repérages précis sur de courtes distances.

Elle a pour cela l'avantage de réaliser un repérage basé sur des mesures de phases qui permet une grande souplesse quant à la dimension du champ de repérage.

On peut, par exemple, couvrir des surfaces de repérage allant de quelques mètres carrés à plusieurs centaines de mètres carrés.

Sur des surfaces restreintes, sa précision est très bonne de par l'utilisation d'un procédé de mesure de phase.

Le procédé et le dispositif de repérage de la position d'une source selon l'invention, ont aussi pour but d'éviter toute ambiguïté de solution dans la position de la source.

Ils ont l'avantage de déterminer la position sans pour autant nécessiter la connaissance de la position initiale grâce à l'utilisation de matériels et de paramètres adaptés.

Un autre objet de l'invention est d'éviter l'encombrement de la zone de repérage par le dispositif.

Elle a en effet l'avantage d'utiliser des antennes situées en dehors de la zone de repérage et notamment en dehors du plan P lorsque l'objet se déplace dans ce plan. Cet avantage est particulièrement intéressant puisqu'il évite tout risque de collision des antennes et de l'objet. Le déplacement de l'objet n'est plus entravé par les obstacles que constituent actuellement les antennes réceptrices.

On évite également tout risque de masquage intervenant lorsqu'un obstacle interfère avec la transmission du signal source. Dans le cas de repérages dans le plan P, il n'est plus nécessaire que la zone de repérage soit préalablement débarrassée des obstacles éventuels.

L'invention a aussi pour but de permettre un repérage basé sur la mesure de déphasage sans pour autant le limiter à deux dimensions.

Dans un mode particulier de réalisation, l'invention a en effet l'avantage de permettre un repérage de l'objet dans un espace à trois dimensions. Cette caractéristique augmente très fortement les possibilités d'utilisation de l'invention puisqu'elle allie un repérage très précis sur de faibles distances et un repérage en trois dimensions.

D'autres buts et avantages apparaîtront au cours de la description qui va suivre qui n'est cependant donnée qu'à titre indicatif.

La présente invention concerne un procédé de repérage de la position d'une source dotée d'un émetteur de micro-ondes destiné principalement à des repérages sur de courtes distances dans une portion de plan ou d'espace, caractérisé par le fait que :

- on utilise au moins deux paires d'antennes placées hors de la zone de déplacement de la source,
- on positionne l'émetteur de la source de telle manière que les paires d'antennes en reçoivent le signal,
- on mesure pour chaque paire d'antennes le déphasage entre les signaux reçus par chacune des antennes composant la paire,
- on détermine l'équation de l'hyperboloïde de révolution représentant le lieu des points où une émission d'ondes identique à celle de la source correspondrait au déphasage mesuré par chaque paire d'antennes,
- on détermine l'intersection des hyperboloïdes de révolution pour définir la position de la source, afin de repérer la position d'une source de façon précise et avec une solution unique.

Elle concerne également un dispositif de repérage de la position d'une source dotée d'un émetteur de micro-ondes mettant en oeuvre le procédé selon l'invention et destiné principalement à des repérages sur de courtes distances dans une portion de plan ou d'espace, caractérisé par le fait qu'il comporte :

- au moins deux paires d'antennes, placées hors de la zone de déplacement de la source (1),
- un émetteur de micro-ondes fixé sur la source et positionné de telle manière que les paires d'antennes en reçoivent le signal,
- une chaîne de mesure permettant de connaître pour chaque paire d'antennes le déphasage entre les signaux reçus par chacune des antennes composant la paire afin de repérer la position d'une source d'ondes de façon précise et avec une solution unique.

L'invention sera mieux comprise au vu des planches de dessin situées en annexe et qui comprennent :

- la figure 1 présentant un mode particulier de réalisation de l'invention,
- la figure 2 illustrant un exemple de repérage dans un plan,
- la figure 3 schématisant un mode particulier de réalisation de la chaîne de mesure,
- la figure 4 schématisant un autre mode particulier de réalisation de l'invention.

Selon l'invention, on utilise d'abord une source (1) qui correspond à l'objet à repérer. La source (1) est dotée d'un émetteur de micro-ondes qui sont des signaux électromagnétiques de longueur d'ondes comprises entre un mètre et un millimètre. Les micro-ondes sont particulièrement avantageuses pour des applications de repérage et de positionnement, compte tenu de leur capacité de transmission dans l'atmosphère.

La nature de la source (1) sera variable et dépendra du domaine d'application dans lequel sera utilisé l'invention. Elle pourra par exemple être un objet mobile ou une personne.

L'émetteur est fixé de façon courante sur la source (1) et sera préférentiellement constitué par un oscillateur dont la fréquence détermine la fréquence de travail du dispositif. On pourra notamment travailler dans la bande X [8,2 GHz-12,4 GHz] ou encore dans la bande S [2 GHz-4 GHz] ou bien dans la bande [35 GHz-300 GHz].

L'émetteur comprend également une antenne qui permet de transmettre le signal. On utilisera une antenne d'un type courant et préférentiellement une antenne omnidirectionnelle et notamment un cornet pyramidal ou une antenne réalisée par câblage imprimé pour ne pas limiter la direction de déplacement du signal.

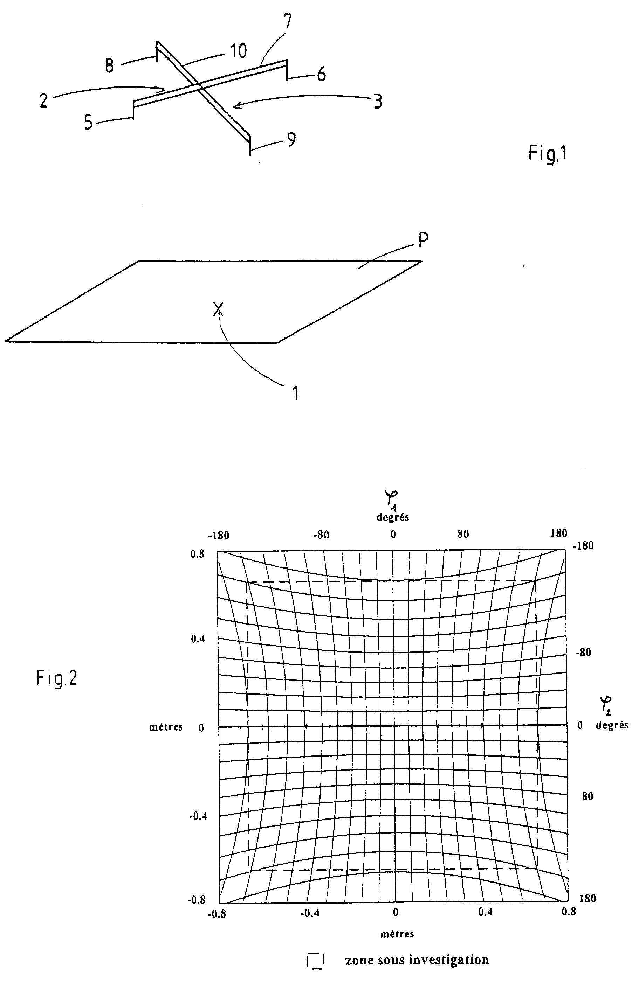

Le signal monochromatique émis par la source (1) et appelé $S_1$ est reçu par au moins deux paires d'antennes (2, 3). Comme l'illustre la figure 1, les paires d'antennes (2, 3) sont composées chacune de deux antennes (5, 6, 8, 9). Les antennes de chaque paire sont fixées sur un support (7, 10) qui pourra se présenter sous diverses formes et notamment sous la forme d'une barre en matériau isolant.

Les antennes (5, 6, 8, 9) seront préférentiellement des antennes d'un type courant et notamment des antennes en laiton. Le nombre de paires (2, 3) d'antennes n'est pas limité et sera au minimum de deux. En effet, deux paires d'antennes sont nécessaires pour un repérage dans un plan. Si on désire effectuer un repérage dans une portion de l'espace c'est-à-dire suivant trois dimensions, il faudra alors réaliser un dispositif comportant trois paires d'antennes tel qu'illustré à la figure 4.

Les antennes (5, 6, 8, 9) sont fixées deux par deux sur des supports (7, 10) pour former les paires (2, 3) et les antennes de chaque paire sont préférentiellement orientées suivant la même direction.

Chaque paire d'antennes (2, 3) permet de déterminer la valeur du déphasage ($\varphi_1$, $\varphi_2$) entre les signaux reçus par chacune de ces antennes et l'équation correspondante de l'hyperboloïde de révolution sur lequel se situe la source (1). Cette hyperboloïde a un axe de révolution orienté suivant celui du support (7, 10) de la paire d'antennes (2, 3) lui correspondant.

Selon l'invention, les axes des supports (7, 10) des paires d'antennes (2, 3) présentent préférentiellement des directions différentes afin d'obtenir des hyperboloïdes de révolution d'axes différents. Les directions sont préférentiellement choisies pour atteindre la meilleure précision dans la zone où se situe la source (1).

La figure 2 présente un exemple de repérage dans le plan P au moyen d'un dispositif à deux paires d'antennes dont les axes de support sont perpendiculaires entre eux et parallèles au plan P. On obtient un quadrillage donnant la position de la source (1) en fonction des déphasages ($\varphi_1$, $\varphi_2$) mesurés qui est particulièrement serrée au centre du diagramme, c'est-à-dire en regard de l'intersection de l'axe des supports (7, 10) des paires d'antennes (2, 3).

En translatant une ou plusieurs paires d'antennes (2, 3) ou en modifiant leur inclinaison, on fait varier la position de l'hyperboloïde de révolution correspondant à chaque paire (2, 3). Il est ainsi possible de modifier le quadrillage ou encore de le déplacer afin d'obtenir la meilleure résolution dans une autre zone de l'espace.

On peut également modifier l'espacement entre les antennes (5, 6, 8, 9) composant chaque paire (2, 3) pour choisir l'excentricité des hyperboloïdes de révolution. Pour augmenter la résolution du repérage, on pourra utiliser un nombre plus important de paires d'antennes et par exemple 4 ou 5 paires.

Chaque antenne (5, 6, 8, 9) reçoit un signal micro-ondes dont la phase dépend de la position de l'antenne dans l'espace. Pour réaliser la mesure des déphasages, il peut être nécessaire d'utiliser des diviseurs de puissance (13) en sortie de chaque antenne. Ces diviseurs seront d'un type courant.

Pour chaque paire d'antennes (2, 3), les deux signaux reçus sont corrélés afin de déterminer leur déphasage ($\varphi_2$, $\varphi_2$). Pour ce faire, on utilisera préférentiellement des coupleurs de type courant et notamment un coupleur à 90° (14) et un coupleur à 180° (15).

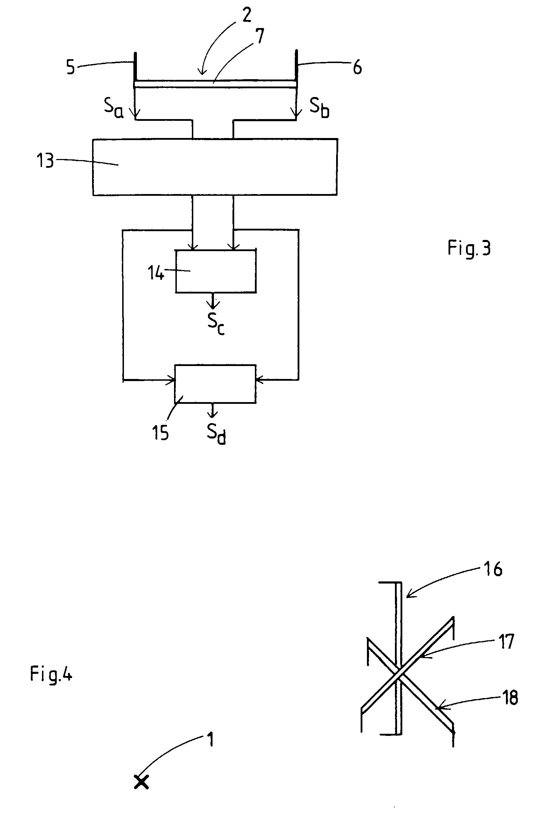

Les éléments constitutifs du dispositif tels que les diviseurs de puissance (13) et les coupleurs effectuent le traitement des signaux reçus par les antennes (5, 6, 8, 9) et constituent la chaîne de mesure dont un mode particulier de réalisation est schématisé à la figure 3.

L'invention comprend également des moyens de calcul qui seront préférentiellement constitués de moyens informatiques permettant de résoudre des systèmes d'équations mathématiques. Les moyens de calcul seront utilisés pour déterminer les équations des hyperboloïdes de révolution représentant le lieu des points où une émission d'ondes identique à celle de la source correspondrait au déphasage mesuré et l'intersection des hyperboloïdes de révolution.

La mise en oeuvre du procédé et du dispositif de repérage de la position d'une source dotée d'un émetteur de micro-ondes selon l'invention, s'effectue suivant plusieurs étapes.

On dote d'abord l'objet à repérer d'un émetteur pour former la source (1).

L'invention permet de s'adapter à la nature du déplacement de la source (1) et on peut modifier sa mise en oeuvre suivant que le déplacement de la source (1) est plan ou tridimensionnel ou encore suivant les dimensions de la zone à couvrir par le repérage.

On pourra notamment faire varier l'excentricité E des hyperboloïdes de révolution qui est donnée par l'équation :

$$E = \frac{4\,\pi\,D}{\lambda\varphi}$$

dans laquelle :

- D est la distance séparant les antennes de la paire (2, 3) considérées,
- $\lambda$ est la longueur d'ondes du signal émis par la source (1),
- $\varphi$ est le déphasage entre les signaux reçus par les antennes (2, 3) considérées et mesuré par le dispositif.

On pourra également modifier l'orientation de l'axe de révolution des hyperboloïdes en modifiant l'inclinaison des supports (7, 10).

Il est encore possible de faire varier le nombre de paires d'antennes (2, 3) suivant la précision souhaitée ou suivant que le problème est plan ou spatial. Dans le cas d'un repérage plan, on pourra, par exemple, se limiter à deux paires d'antennes (2, 3).

Une fois les différents paramètres fixés, on dote l'objet à repérer d'un émetteur pour former la source (1). L'émetteur sera à l'origine d'un signal micro-ondes monochromatique.

Ce signal est reçu après un temps de propagation par chacune des antennes (5, 6, 8, 9) sous la forme de signaux ayant chacun une phase spécifique à la position spatiale des antennes (5, 6, 8, 9).

Ainsi, pour chaque paire d'antennes (2, 3), on détecte deux signaux $S_A$ et $S_B$ qui présentent un déphasage ($\varphi_1$, $\varphi_2$).

Les signaux $S_A$ et $S_B$ sont traités au moyen de la chaîne de mesure telle que l'illustre la figure 3.

Les signaux sont d'abord appliqués sur des diviseurs de puissance (13).

Ils sont ensuite corrélés au moyen de corrélateurs tels que des coupleurs (14, 15). Un coupleur à 90° (14) donnera un signal $S_C$ proportionnel au sinus du déphasage ($\varphi_1$, $\varphi_2$).
Un coupleur à 180° (15) fournira un signal $S_D$ proportionnel au cosinus du déphasage ($\varphi_1$, $\varphi_2$).

La connaissance du sinus et du cosinus permet de connaître la valeur de déphasage ($\varphi_1$, $\varphi_2$) à 360° près. Pour exclure l'ambiguïté possible dûe à la période de 360°, l'invention a la particularité de limiter les excursions possibles des déphasages ($\varphi_1$, $\varphi_2$) à 360°. On adaptera donc des paramètres tels que la longueur d'ondes ou la distance séparant les antennes de chaque paire d'antennes (2, 3) pour couvrir toute la zone de repérage souhaitée sans que cela ne nécessite des déphasages de plus de 360°.

Connaissant la valeur des déphasages ($\varphi_1$, $\varphi_2$) sans ambiguïté, on peut alors déterminer par les moyens de calcul, les équations des hyperboloïdes de révolution correspondant à chaque déphasage.

L'équation de chaque hyperboloïde de révolution est donnée par la connaissance de ses foyers (correspondant aux points de localisation des antennes composant la paire considérée) et de son excentricité dont l'équation

$$E = \frac{4\,\pi\,D}{\lambda\varphi}$$

a été évoquée précédemment.

Dans le cas d'un repérage dans un plan P, la détermination de deux hyperboloïdes et la connaissance de l'équation du plan P suffit à déterminer la position de la source par le calcul de leur intersection. On pourra donc n'utiliser que deux paires d'antennes (2, 3) qui seront par exemple placées à une même altitude au-dessus du plan P.

Pour un repérage dans une portion de l'espace, il est nécessaire de déterminer trois hyperboloïdes de révolution pour définir leur point d'intersection qui correspond à la position de la source (1). Il faut donc, dans ce cas, utiliser au moins trois paires d'antennes (16, 17, 18), tel que l'illustre la figure 4.

**Revendications**

1. Procédé de repérage de la position d'une source (1) dotée d'un émetteur de micro-ondes, destiné principalement à des repérages sur de courtes distances dans une portion de plan ou d'espace, caractérisé par le fait que :

   - on utilise au moins deux paires d'antennes (2, 3) placées hors de la zone de déplacement de la source (1),
   - on positionne l'émetteur de la source de telle manière que les paires d'antennes (2, 3) en reçoivent le signal,
   - on mesure, pour chaque paire d'antennes (2, 3), le déphasage entre les signaux reçus par chacune des antennes (5, 6, 8, 9) composant la paire (2, 3),
   - on détermine l'équation de l'hyperboloïde de révolution représentant le lieu des points où une émission d'ondes identique à celle de la source (1) correspondrait au déphasage ($\varphi_1$, $\varphi_2$) mesuré par chaque paire de antennes (2, 3),

- on détermine l'intersection des hyperboloïdes de révolution pour définir la position de la source (1), afin de repérer la position d'une source de façon précise et avec une solution unique.

2. Procédé de repérage de la position d'une source (1) dotée d'un émetteur de micro-ondes, destiné principalement à des repérages sur de courtes distances dans une portion de plan ou d'espace, selon la revendication 1, caractérisé par le fait qu'on utilise au moins trois paires d'antennes (16, 17, 18) et qu'on oriente les paires d'antennes (16, 17, 18) suivant des directions distinctes afin de repérer la position d'une source dans une portion d'espace.

3. Dispositif de repérage de la position d'une source (1) dotée d'un émetteur de micro-ondes destiné principalement à des repérages sur de courtes distances dans une portion de plan ou d'espace, caractérisé par le fait qu'il comporte :

- au moins deux paires d'antennes (2, 3) placées hors de la zone de déplacement de la source (1),
- un émetteur de micro-ondes fixé sur la source (1) et positionné de telle manière que les paires d'antennes (2, 3) en reçoivent le signal,
- une chaîne de mesure permettant de connaître pour chaque paire d'antennes (2, 3), le déphasage ($\varphi_1$, $\varphi_2$) entre les signaux reçus par chacune d'antennes (5, 6, 8, 9) composant la paire (2, 3) afin de repérer la position d'une source d'ondes, de façon précise et avec une solution unique.

4. Dispositif de repérage de la position d'une source (1) dotée d'un émetteur de micro-ondes destiné principalement à des repérages sur des courtes distances, dans une portion de plan ou d'espace, selon la revendication 3, caractérisé par le fait qu'il comporte des moyens de calcul des équations des hyperboloïdes de révolution représentant le lieu des points où une émission d'ondes identique à celle de la source (1) correspondrait aux déphasages ($\varphi_1$, $\varphi_2$) mesurés et de l'intersection des hyperboloïdes de révolution pour définir la position de la source (1).

5. Dispositif de repérage de la position d'une source (1) dotée d'un émetteur de micro-ondes destiné principalement à des repérages sur de courtes distances dans une portion de plan ou d'espace, selon la revendication 4, caractérisé par le fait que la source (1) se déplace dans un plan P et que la position de la source (1) est déterminée par l'intersection des hyperboloïdes de révolution et du plan P.

6. Dispositif de repérage de la position d'une source (1) dotée d'un émetteur de micro-ondes destiné principalement à des repérages sur de courtes distances dans une portion de plan ou d'espace, selon la revendication 3, caractérisé par le fait que les distances séparant les antennes (5, 6, 8, 9) de chaque paire d'antennes (2, 3) sont différentes.

7. Dispositif de repérage de la position d'une source (1) dotée d'un émetteur de micro-ondes destiné principalement à des repérages sur de courtes distances dans une portion de plan ou d'espace, selon la revendication 3, caractérisé par le fait que la source (1) se déplace dans un plan P et que toutes les antennes (5, 6, 8, 9) sont situées à une même altitude par rapport au plan P.

8. Dispositif de repérage de la position d'une source (1) dotée d'un émetteur de micro-ondes destiné principalement à des repérages sur de courtes distances dans une portion de plan ou d'espace, selon la revendication 3, caractérisé par le fait que la source (1) se déplace dans un plan P et qu'au moins une paire d'antennes (2, 3) n'a pas son axe parallèle au plan P.

9. Dispositif de repérage de la position d'une source (1) dotée d'un émetteur de micro-ondes destiné principalement à des repérages sur de courtes distances dans une portion de plan ou d'espace, selon la revendication 3, caractérisé par le fait que l'émetteur de micro-ondes émet un signal dont la fréquence est comprise dans la bande X [8,2 GHz-12,4 GHz] ou dans la bande S [2GHz-4 HGz].

10. Dispositif de repérage de la position d'une source (1) dotée d'un émetteur de micro-ondes destiné principalement à des repérages sur de courtes distances dans une portion de plan ou d'espace selon la revendication 3, caractérisé par le fait que l'émetteur de micro-ondes émet un signal dont la fréquence est comprise dans la bande [35 GHz - 300 Ghz].

Fig.1

Fig.2

$\Upsilon_1$
degrés

$\Upsilon_2$
degrés

métres

métres

$\Box$  zone sous investigation

Fig.3

Fig.4

**Office européen des brevets**

# RAPPORT DE RECHERCHE EUROPEENNE

Numero de la demande

EP 96 49 0023

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | US-A-3 680 121 (ANDERSON ROY E ET AL) 25 Juillet 1972 | 1,3 | G01S5/06 |
| Y | * colonne 2, ligne 28 - colonne 3, ligne 45 * | 2,4-9 | |
| Y | US-A-5 493 308 (BINGHAM DENNIS N ET AL) 20 Février 1996 | 2,9 | |
| A | * colonne 2, ligne 61 - colonne 3, ligne 42 * | 1,3-5 | |
| Y | WO-A-95 26510 (QUALCOMM INC) 5 Octobre 1995 | 4,5 | |
| A | * page 11, ligne 38 - page 12, ligne 15 * | 1,3,6-8 | |
| Y | US-A-5 235 341 (EFFLAND JOHN E ET AL) 10 Août 1993 | 6-8 | |
| A | * colonne 3, ligne 39 - colonne 5, ligne 2 * | 1-4 | |
| A | US-A-5 216 429 (NAKAGAWA ET AL) 1 Juin 1993 * colonne 3, ligne 54 - colonne 4, ligne 40 * | 1-8 | **DOMAINES TECHNIQUES RECHERCHES (Int.Cl.6)** G01S |
| A | EP-A-0 006 448 (SIEMENS AG) 9 Janvier 1980 * page 7, ligne 17 - page 8, ligne 4 * | 1,3-8 | |

Le présent rapport a été établi pour toutes les revendications

| Lieu de la recherche | Date d'achèvement de la recherche | Examinateur |
|---|---|---|
| LA HAYE | 31 Octobre 1996 | Haffner, R |

EPO FORM 1503 03.82 (P04C02)